# EUROPEAN PATENT APPLICATION

(11) **EP 4 643 959 A1**
(43) Date of publication of application: **05.11.2025**
(21) Application number: 25173292.1
(22) Date of filing: 29.04.2025
(51) Int. Cl.: A62C 2/06, A62C 2/12, F16L 5/04

(54) **FIRE DAMPER OR SMOKE EVACUATION SHUTTER**

(30) Priority: 30.04.2024 BE 202405253
(71) Applicant: Rf-Technologies, 9860 Oosterzele (BE)
(72) Inventor: Vandenheede, Pascal, 9860 Oosterzele (BE)
(74) Representative: BiiP bv

(57) **Abstract**

Fire damper or smoke evacuation shutter, comprising a fixed frame defining a central channel wherein a door element is provided, characterised that on an outer surface of said fixed frame, directed away from said central channel, a pocket is provided made of a fire-resistant cloth, said pocket containing an amount of intumescent material.

## Description

### Field of the Invention

The current invention concerns a fire damper or smoke evacuation shutter, comprising a fixed frame defining a central channel wherein a door element is provided, and whereby at an outer surface of said fixed frame, directed away from said central channel, an intumescent material is provided.

### Background to the Invention

Fire dampers are typically provided in ventilation ducts interconnecting several rooms - at a location where a duct crosses a wall. The goal of a fire damper is providing a fireproof barrier preventing heat, smoke, and fire from crossing the wall through the opening made therein for the ventilation duct or other kind of shaft.

Fire dampers are known to comprise a fixed frame that is to be fixed in, or at the surface of a wall opening and defining a central channel extending through the wall opening. The fixed frame extends at both sides in end pieces configured to connect with ventilation ducts or other kinds of shafts. As such the fire damper defines a section of the ventilation ductwork.

Inside the fixed frame of a fire damper, a door element is provided that can seal off the central channel in case of an alarm and prevent the propagation of fire through the ductwork, prevents the spreading of smoke through the ductwork and prevents excessive heat transfer through the door element.

Smoke evacuation shutters are part of a smoke evacuation ductwork and are intended to open in areas where a fire rages, allowing the evacuation of smoke and heat. Alike fire dampers, smoke evacuation shutters are known to comprise of a fixed frame, to be fixed in or at the surface of a wall or smoke evacuation ductwork, and a door element, that opens in the fire affected areas and remains closed in the non-affected areas.

At the outer surface of the fixed frame, it is the part thereof facing the wall edges defining the wall opening. The sealing of the wall opening is to be achieved in another way. Unlike the central channel, having a well-defined cross section and which is the result of assembling a fire damper in a well-controlled environment as a production site, the dimensions of the wall opening are often, if not always well defined. Yet sealing-off this opening is key for an adequate, effective fire control.

At present the gap between the outer surface of a fixed frame of a fire damper or smoke evacuation shutter and the wall or duct opening is sealed by closing the gap between wall edges and the fixed frame with sealing materials such as mortar, plaster, mineral fibres. -The application of such sealing however is labour intensive and prone to errors, leaving gaps or small passages open wherethrough smoke may spread. Furthermore, due to the difference in heat expansion between the material of the fixed frame and the plaster, and degradation of the sealing material, cracks may occur over time resulting in sub ideal sealing of the fire damper versus the wall.

The same applies for smoke evacuation shutters, that are known to be installed in a wall or duct opening between a room and a smoke evacuation shaft. Smoke evacuation shutters are configured to remain open in a room where a lot of smoke is generated due to for example a fire, such that the smoke can be evacuated through the smoke evacuation shaft that is maintained at under pressure. As several smoke evacuation shutters are connected to a single smoke evacuation shaft, the smoke evacuation shutters connecting rooms where no fire is raging to the smoke evacuation shaft are to be remained close, this to prevent smoke entering the room but also to maintain the under pressure in the smoke evacuation shaft and allow an efficient smoke evacuation.

A known solution for the above-mentioned problems is the application of an intumescent material at the outer surface of the fixed frame. In case of a fire, the heat will cause the intumescent material to expand and thus close the gap between the frame and the opening. A known problem for this type of sealing is the un-ability to maintain the sealing of the gap during a minimum duration. Especially for smoke evacuation shutters installed directly on a smoke evacuation duct. Because the maintained under-pressure of the duct is acting on this sealing, generating an extraction force on it.

The present invention addresses the above-mentioned problems and aims at providing a fire damper or smoke evacuation shutter comprising means allowing to guarantee a good fireproof and pressure-resistant sealing between the fixed frame and the edges of the wall opening wherein the fire damper or smoke evacuation shutter is installed.

### Brief Summary of the Invention

The present invention solves the above problem by providing a fire damper or smoke evacuation shutter, comprising a fixed frame defining a central channel wherein a door element is provided, characterised that on an outer surface of said fixed frame, directed away from said central channel, a pocket is provided made of a fire-resistant cloth, said pocket containing an amount of intumescent material.

By providing an amount of intumescent material in a fire-resistant pocket, a sealing is provided at the outer surface of the fixed frame of the fire damper or smoke evacuation shutter that expands upon heating, thereby sealing off any gap that may be present between the fixed frame and the-edges of the opening wherein the fixed frame is installed.

Said fire-resistant cloth may be made of a woven glass fibre tissue, preferably a coated glass fibre tissue and most preferably a silicon coated glass fibre tissue. The intumescent material preferably comprises graphite.

In accordance with the present invention, the pocket is fixed to the fixed frame of the fire damper or smoke evacuation shutter. Said pocket preferably has a volume exceeding the volume of intumescent material provided therein when the intumescent material is in a non-expanded state and thus allows the expansion of the intumescent material to at least a certain degree, wherein it can seal off any openings between the fixed frame and a wall part.

The fixed frame preferably comprises a distal end and a proximal end, whereby the pocket is fixed with a first portion thereof at an inner surface of the fixed frame whereby the pocket extends over the distal end or proximal end of the fixed frame to the outer surface, whereby the intumescent material provided in the pocket is situated at the outer surface of the fixed frame.

The present invention also concerns a smoke evacuation shutter having a fixed frame comprising a proximal section intended to face a room side and a proximal section intended to face a smoke evacuation shaft side, whereby the proximal section comprises an aluminium profile defining a first section of the central channel and the distal section comprises a metal profile define a second section of the central channel. Both sections connected to one another by a plate of insulate material and said insulate material protruding from the metal profile of the distal section in a direction opposed to the proximal section, thereby defining the distal end of the fixed frame, characterised in that the pocket comprising the intumescent material is fixed to said plate of insulate material.

The present invention also concerns the use of a pocket made of a fire-resistant cloth, said pocket containing an amount of intumescent material as an fire barrier between a fixed frame of a fire damper or smoke evacuation shutter installed in a wall opening and an edge of the wall delimiting said opening.

### Brief Description of the Appended Figures

The foregoing and other features of the present invention will become more fully apparent from the following description and appended claims, taken in conjunction with the accompanying figures. Understanding that these figures depict only several embodiments in accordance with the present invention and are not considered limiting of its scope, the disclosure will be described with additional specificity and detail through the use of the accompanying figures.
Fig. 1 schematically represents a cross section of a smoke evacuation shutter according to the present invention;
Fig. 2 schematically represents an alternative embodiment of the smoke evacuation shutter of Fig. 1.
Fig. 3 schematically represents another alternative embodiment of the smoke evacuation shutter of Fig. 1.
Fig. 4 schematically represents some examples of pockets holding intumescent material.

### Detailed Description of the Invention

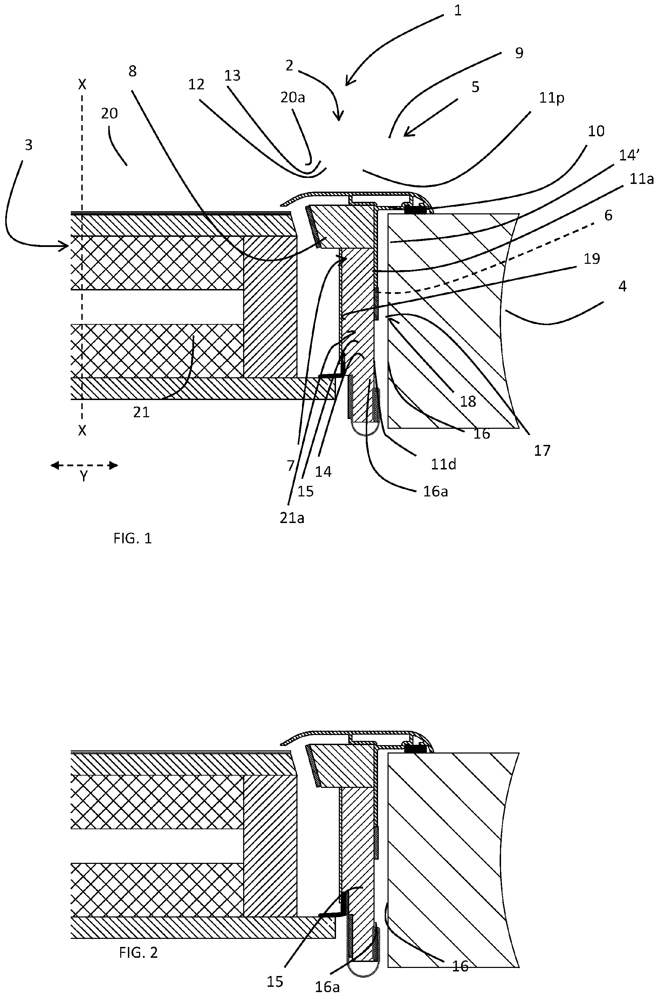

Fig. 1 shows a partial cross-section of a smoke evacuation shutter 1 according to the present invention installed in a wall opening. The smoke evacuation shutter shown comprises a fixed frame 2 and a door element 3 mounted thereto, whereby the door can move between an open position and a closed position, the closed position being showed in Fig. 1.

The fixed frame 2 comprises an outer frame 5 defining a first channel 6 and an inner frame 7 defining a second channel 8 that in this case corresponds to the actual through channel or central channel of the smoke exhaust shutter and that is in this case closed off by the door element 3. Both the first and second channel extend in a same X-direction, whereby the second channel 8 has a smaller cross section than the first channel 6, especially as the outer frame 5 and inner frame 7 are spaced apart from one another in a direction perpendicular to the X- direction, leaving a gap between both frames 5 and 7, said gap circumscribing the inner frame 7 such that the inner frame 7 does not comprise a point where it directly contacts the outer frame 5.

The smoke evacuation shutter illustrated in Fig. 1 & 2 has an installation orientation, meaning that it is intended for being installed in a particular orientation between a room and a smoke exhaust shaft or smoke exhaust duct, whereby in case of smoke evacuation, the smoke travels from the room side through the smoke exhaust damper, in particular the second channel 8 thereof into or towards the smoke evacuation shaft or smoke evacuation duct. The side of the smoke evacuation shutter facing the room is further referred to as the air inlet or proximal side P, whereas the side of the smoke evacuation shutter facing the smoke evacuation shaft of smoke evacuation duct is further referred to as the air outlet or distal side D.

In the embodiment of the smoke exhaust damper illustrated in the Figs. 1 to 2, the outer frame 5 defines a casing 9 at the proximal side of the smoke evacuation shutter, which casing 9 is configured to abut or face a portion of a building wall or duct surrounding the opening wherein the smoke evacuation shutter-is installed. This casing extends in a predominant direction Y, perpendicular to the X-direction. From the casing 9 extends a leg 10 of the outer frame towards the distal side of the smoke evacuation shutter, which leg defines the actual first channel. In this case the leg 10 of the outer frame partially protrudes from the second channel 8 in the X direction towards the proximal side P of the smoke exhaust evacuation shutter.

The outer frame 5 is preferably made from a metal material, in particular aluminium.

The inner frame 7 in this case comprises a single wall, but may as well comprise a multi-layered wall or a wall composed of comparted hollow profiles. The inner frame 7 is partially inserted in the first channel and partially protrudes therefrom towards the distal side D of the smoke evacuation shutter. The inner wall is preferably made from a material having a melting point of above 700°C, more preferably it is made from a material that is resistant to a temperature of at least 700°C whereby with resistant is meant that the inner frame maintains its integrity up to that temperature of 700°C. The inner frame is preferably manufactured in steel.

An insert 11 may be present in the above-mentioned gap defined between the outer frame 5 and the inner frame 7. The insert 11 provides a thermal insulation between the outer frame 5 and the inner frame 7 and circumscribes the inner frame, preferably in its entirety over at least a section of the length of the inner frame 7 measured in the X-direction. The insert may hereby comprise a single element or may comprises a plurality of elements positioned one next to another to define a continuous insulation between the inner frame and the outer frame.

The insert 11 preferably comprises a main part 11a situated between the inner and outer frames and extending along the inner frame 7, a proximal part 11p, protruding from the inner frame in the X-direction towards the proximal end of the smoke exhaust damper; and a distal part 11d, protruding from the inner frame in the X-direction towards the distal end of the smoke exhaust damper.

The main part 11a preferably has a width that is equal to or substantially equal to the width of the gap between the inner and outer frames, such that the insert 11 at least locally contacts both the inner frame 7 and the outer frame 5.

The proximal part 11p preferably has a width larger than the width of the main part 11a such that this proximal part 11p protrudes from the main part in the Y-direction towards the centre of the second channel, whereby at a free end 12 of that proximal part 11p a strip of intumescent material is provided 13. This proximal part 11p is covered by the casing 9 defined by the outer frame at the proximal end of the smoke exhaust damper.

The distal part 11d of the insert 11 defines a wall surface 14 oriented perpendicular to the X- direction and facing the centerline X-X second channel 8. On this wall surface 14 a second strip 15 of intumescent material is provided.

According to the present invention an amount of intumescent material 16 is provided on a surface 17 of the insert facing away the centerline X-X of the second channel, which amount of intumescent material, in case of heat activation thereof are intended to fill a potential space between the insert and edges 18 of the wall or duct defining the opening therein wherein the smoke evacuation shutter is installed or to be installed. In accordance with the present invention this amount of intumescent material is provided in a pocket is provided made of a fire-resistant cloth 16a. As is shown in Fig. 1 this cloth of fire-resistant material is in this case fixed to the insert 11, preferably at a side thereof facing the inner channel, whereby the cloth extends over the distal part of insert 11 to the outer surface of the fixed frame where the amount 16 of intumescent material is enveloped in the cloth 16a defining the pocket. The cloth 16a can be attached to the fixed frame for example by staples, by stitching or by gluing. In case of stitches, the stitching is preferably performed with fire-proof material. Similarly in case of gluing, it is preferred that a fire-proof glue is used, such as water glass. The part of the cloth fixed to the fixed frame is in this case covered by the strip 15 of intumescent material.

Optionally, a further strip of intumescent material 14' can be provided on the surface 17 of the insert, facing away the centerline X-X. This strip of intumescent material 14' is hereby provided at a distant and proximal from the above-mentioned amount of intumescent material 16.

On the above mentioned wall surface 14 of the distal part 11d of the insert, facing the centerline X-X of the second channel, a sealing strip 19 may be provided that extends towards the centerline X-X of the second channel. Alternatively, this sealing strip is provided on the inner frame.

The insert 11 is preferably made of a material selected from the group comprising gypsum, CaSi, glass reinforced gypsum, magnesium based materials, perlite or vermiculite and admixtures thereof, whereby calcium silicate is preferred. The thermal conductivity of the insert is preferably of a value equal to or less than 0,25 Wm⁻¹K⁻¹.

The door element 3 of the smoke exhaust damper in this case comprises two main panels 20 & 21 extending a plane perpendicular to the X-direction in a closed position of the door. A first of these panels, further referred to as the proximal panel 20, faces the proximal end P of the smoke exhaust damper when in a closed position, whereas the other panel, further referred to as the distal panel 21, faces the distal end D of the smoke exhaust damper when in a closed position. As illustrated in Fig. 1 & 2, in a closed position of the door element 3, the proximal panel 20 comprising a circumscribing edge 20a facing the proximal part 11p of the insert and the strip of intumescent material 13 provided thereon. In the same closed position, the distal panel 21 comprising a circumscribing edge 21a facing the distal part 11d of the insert and the second strip 15 of intumescent material provided thereon, whilst it also contacts the sealing strip 19.

The embodiment of Fig. 2 differs from the one in Fig. 1 in that the cloth of fire-resistant material is not covered by the strip 15 of intumescent material, but on the contrary covers this actual strip. Without being bound to any theory, it is believed that such set-up is preferable because it allows minimizing a risk on deformation of the fixed frame upon expansion of the intumescent material 16. In particular, an expansion of the intumescent material will cause a force on the distal part 11d of the fixed frame which pressure - in case of the embodiment of Fig. 2 - is countered by a pressure exerted by the expansion of the intumescent strip 15 on the same fire resistant cloth 16a.

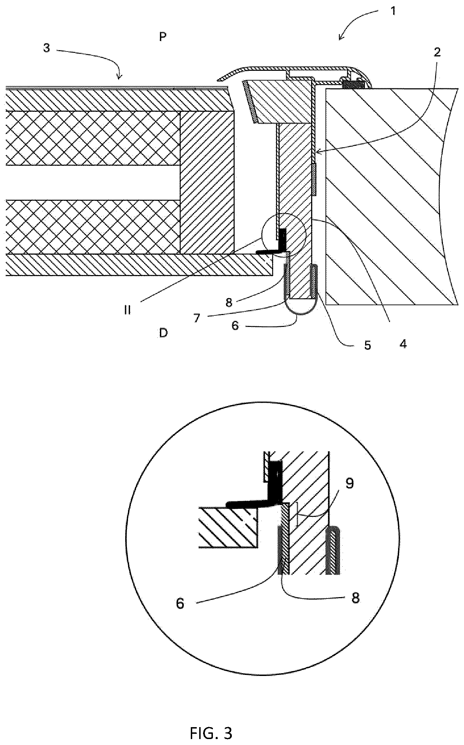

In another embodiment as illustrated in Fig. 3, the first portion of the pocket, fixed to the inner surface of the fixed frame is partially covered by a strip of intumescent material facing the central channel of the fixed frame, such that a most proximate positioned section of this strip of intumescent material remains uncovered by the fire-resistant cloth. The fire-resistant cloth defines the pocket on one of its opposed end portions, while the other end portion extends over the distal end (D) of the fixed frame (2) towards the inner surface (7) thereof facing the central channel, whereby it partially covers a strip (8) of intumescent material arranged on the inner surface of the fixed frame proximate to the distal end of the fire damper or smoke evacuation shutter, such that a most proximate positioned section (9) of this strip of intumescent material remains uncovered by the fire resistant cloth.

Irrespective of the embodiment of the current invention, the cloth of fire-resistant material is preferably a woven mineral fiber tissue, such as for example basalt fiber tissue or glass fiber tissue. Such tissue has a heat resistance, i.e. maintains its structural integrity to temperatures of 550°C or more. The mineral fibers of the tissue are preferably coated to allow good processability, such coating may be a silicon-based coating.

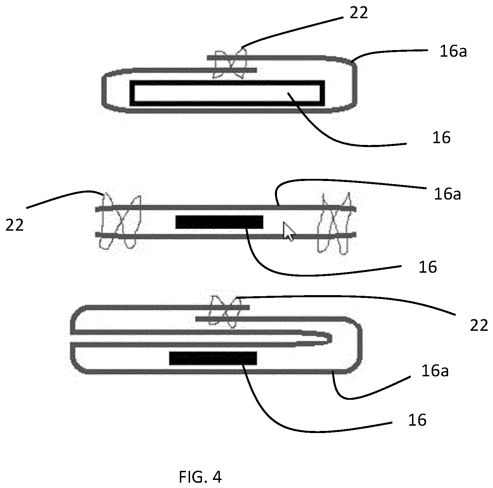

The cloth of fire-resistant material preferably defines a pocket wherein the amount 16 of intumescent material is provided. This pocket is preferably tightly closed to prevent opening thereof when the intumescent material expands. In order to achieve a good closure of the pocket, the pocket can be stitched close in accordance with one of the configurations of Fig. 4, which just provides some examples and is by no means limiting the manner in which to close the pocket. Apart from stitches 22, preferably made with fireproof mineral fiber material, a fireproof glue may also be applied, for example a water glass-based glue. Although the above preferred embodiments encompass a specific fixed frame of a smoke evacuation shutter, it is clear that the pocket made of a fire resistant cloth - said pocket containing an amount of intumescent material - may be used on any type of fire damper or smoke evacuation shutter as a fire barrier between a fixed frame of the fire damper or smoke evacuation shutter installed in a wall opening and an edge of the wall delimiting said opening.

The pocket is hereby dimensioned to have a volume that exceeds the volume of the intumescent material when in a non-expanded state, this to allow an expansion of said intumescent material to at least a certain degree. The pocket has the goal to limit the free expansion of the intumescent material, to guide said expansion in a preferred direction and to protect the expanded intumescent material during a fire such that it maintains its function of heat and fire barrier over a predetermined amount of time.

The guided expansion of the intumescent material allows to fill the variable gap that may exist between the fixed frame of the fire damper or smoke evacuation shutter, without the intumescent material expanding further in a non-desirable direction in a amount wherein it becomes too loose to maintain its barrier functionality.

## Claims

1. Fire damper or smoke evacuation shutter, comprising a fixed frame defining a central channel wherein a door element is provided, characterised that on an outer surface of said fixed frame, directed away from said central channel, a pocket is provided made of a fire-resistant cloth, said pocket containing an amount of intumescent material, said fixed frame comprising a distal end and a proximal end, whereby the pocket is fixed with a first portion thereof at an inner surface of the fixed frame whereby the pocket extends over the distal end or proximal end of the fixed frame to the outer surface, whereby the intumescent material provided in the pocket is situated at the outer surface of the fixed frame.

2. Fire damper or smoke evacuation shutter according to claim 1, said fire resistant cloth, made of a woven mineral fibre tissue.

3. Fire damper or smoke evacuation shutter according to claims 2, said woven mineral fibre tissue being coated, preferably silicon coated.

4. Fire damper or smoke evacuation shutter according to any of the preceding claims, said intumescent material comprising graphite.

5. Fire damper or smoke evacuation shutter according to any of the preceding claims, wherein said pocket is fixed to the fixed frame of the fire damper.

6. Fire damper or smoke evacuation shutter according to any of the preceding claims, wherein said pocket has a volume exceeding the volume of intumescent material provided therein when the intumescent material is in a non-expanded state.

7. Fire damper or smoke evacuation shutter according to claim 1, wherein the first portion of the pocket, fixed to the inner surface of the fixed frame is covered by a strip of intumescent material facing the central channel of the fixed frame.

8. Fire damper or smoke evacuation shutter according to claim 1, wherein the first portion of the pocket, fixed to the inner surface of the fixed frame is partially covered by a strip of intumescent material facing the central channel of the fixed frame, such that a most proximate positioned section of this strip of intumescent material remains uncovered by the fire-resistant cloth.

9. Smoke evacuation shutter according to any of the preceding claims, having a fixed frame comprising a proximal section intended to face a room side and a distal section intended to face a smoke evacuation shaft side, whereby the proximal section comprises an aluminium profile defining a first section of the central channel and the distal section comprises a steel profile defining a second section of the central channel. Both sections connected to one another by a plate of insulate material and said insulate material protruding from the metal profile of the distal section in a direction opposed to the proximal section, thereby defining the distal end of the fixed frame, **characterised in that** the pocket comprising the intumescent material is fixed to said plate of insulate material.

10. Use of a pocket made of a fire-resistant cloth, said pocket containing an amount of intumescent material as a fire barrier between a fixed frame of a fire damper or smoke evacuation shutter installed in a wall opening and an edge of the wall delimiting said opening.
